(19) Europäisches Patentamt
European Patent Office
Office européen des brevets

(11) EP 4 651 256 A1

(12) **EUROPEAN PATENT APPLICATION**

(43) Date of publication:
**19.11.2025 Bulletin 2025/47**

(21) Application number: **25177133.3**

(22) Date of filing: **16.05.2025**

(51) International Patent Classification (IPC):
***H01M 10/0567*** *(2010.01)* ***H01M 10/0569*** *(2010.01)*
*H01M 4/58* *(2010.01)* *H01M 10/052* *(2010.01)*

(52) Cooperative Patent Classification (CPC):
**H01M 10/0567; H01M 10/0569;** H01M 4/5825; H01M 10/052; H01M 2300/0034; H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.05.2024 KR 20240064351**

(71) Applicants:
- **SK On Co., Ltd.**
  **Seoul 03161 (KR)**
- **SK innovation Co., Ltd.**
  **Seoul 03188 (KR)**

(72) Inventors:
- **KIM, Jeong Yun**
  **34124 Daejeon (KR)**
- **PARK, Min Woo**
  **34124 Daejeon (KR)**
- **KIM, Myoung Lae**
  **34124 Daejeon (KR)**
- **JEON, Hyun Ji**
  **34124 Daejeon (KR)**
- **CHO, In Haeng**
  **34124 Daejeon (KR)**

(74) Representative: **Stolmár & Partner Patentanwälte PartG mbB**
**Blumenstraße 17**
**80331 München (DE)**

# (54) ELECTROLYTE FOR LITHIUM SECONDARY BATTERY AND LITHIUM SECONDARY BATTERY INCLUDING THE SAME

(57) An electrolyte for a lithium secondary battery according to exemplary embodiments includes an additive including a compound having a specific structure, an organic solvent and a lithium salt. Accordingly, a lithium secondary battery including the electrolyte for a lithium secondary battery may exhibit improved low-temperature performance and high-temperature stability.

[FIG. 1]

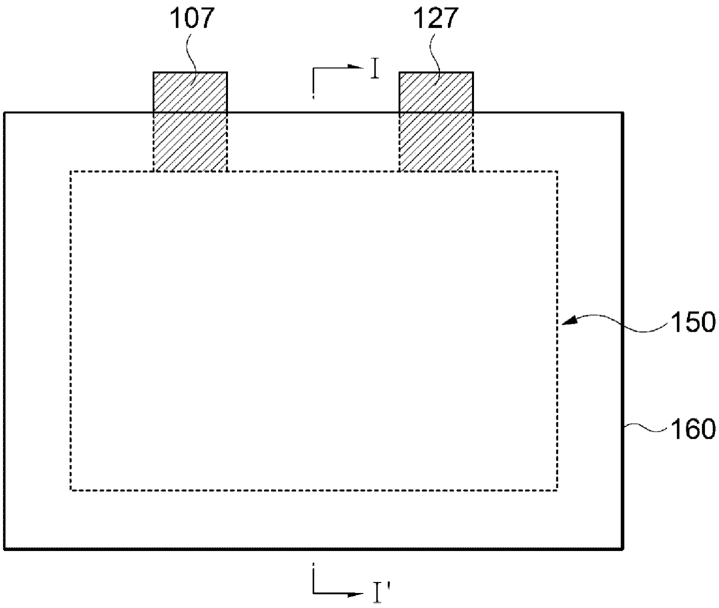


EP 4 651 256 A1

## Description

[BACKGROUND OF THE INVENTION]

1. Field of the Invention

The present disclosure relates to an electrolyte for a lithium secondary battery and a lithium secondary battery including the same, and more specifically, to an electrolyte for a lithium secondary battery, which includes a solvent and an electrolyte salt, and a lithium secondary battery including the electrolyte.

2. Description of the Related Art

A secondary battery is a battery that can be repeatedly charged and discharged, and has been widely applied to portable electronic devices such as a mobile phone, a laptop computer, etc. as their power sources. Among the secondary batteries, a lithium secondary battery has a high operating voltage and a high energy density per unit weight, making it advantageous in terms of charging speed and lightweight design. In this regard, the lithium secondary battery has been actively developed and applied to various industrial fields.
The lithium secondary battery may include: for example, an electrode assembly including a cathode, an anode and a separation membrane interposed between the cathode and the anode; and an electrolyte in which the electrode assembly is impregnated.
The lithium secondary battery may further include, for example, a pouch-type outer case in which the electrode assembly and the electrolyte are housed.
The cathode of a lithium secondary battery may be prepared by, for example, applying a cathode slurry including a cathode active material, a binder, and further including a conductive material to a cathode current collector, followed by drying and pressing the same.
When the lithium secondary battery is repeatedly charged and discharged, side reactions may occur between the cathode active material and the electrolyte, which can degrade the stability and cycle life properties of the lithium secondary battery.

[SUMMARY OF THE INVENTION]

An object of the present disclosure is to provide an electrolyte for a lithium secondary battery with improved low-temperature performance and high-temperature properties.
Another object of the present disclosure is to provide a lithium secondary battery with improved low-temperature performance and high-temperature properties.
An electrolyte for a lithium secondary battery according to exemplary embodiments includes: an additive which includes a compound having a structure represented by Formula 1 below; an organic solvent; and a lithium salt.

[Formula 1]

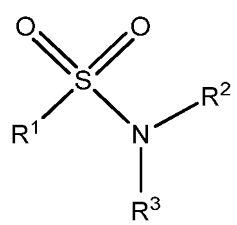

In Formula 1, $R^1$ is an aryl group having 6 to 12 carbon atoms in which at least one hydrogen atom is substituted with an alkyl group having 1 to 10 carbon atoms, an aryl group having 6 to 12 carbon atoms, an alkenyl group having 2 to 10 carbon atoms, an alkyl group having 1 to 10 carbon atoms, an alkoxy group having 1 to 10 carbon atoms, a hydroxyl group or a hydrogen atom.
$R^2$ and $R^3$ may be each independently an alkyl group having 1 to 10 carbon atoms, an alkenyl group having 2 to 10 carbon atoms or a substituted or unsubstituted silyl group.
In some embodiments, $R^1$ may be an aryl group having 6 to 10 carbon atoms in which at least one hydrogen atom is substituted with an alkyl group having 1 to 6 carbon atoms, an aryl group having 6 to 10 carbon atoms, an alkenyl group having 2 to 6 carbon atoms, an alkyl group having 1 to 6 carbon atoms, an alkoxy group having 1 to 6 carbon atoms, a

hydroxyl group or hydrogen.

$R^2$ and $R^3$ may be each independently an alkyl group having 1 to 6 carbon atoms, an alkenyl group having 2 to 6 carbon atoms or a substituted or unsubstituted silyl group.

In some embodiments, $R^1$ may be an aryl group having 6 to 12 carbon atoms in which at least one hydrogen atom is substituted with an alkyl group having 1 to 10 carbon atoms, an aryl group having 6 to 12 carbon atoms, an alkyl group having 1 to 10 carbon atoms, or an alkenyl group having 2 to 10 carbon atoms.

$R^2$ and $R^3$ may be each independently an alkyl group having 1 to 10 carbon atoms, an alkenyl group having 2 to 10 carbon atoms or a substituted or unsubstituted silyl group.

In some embodiments, $R^1$ may be an aryl group having 6 to 10 carbon atoms in which at least one hydrogen atom is substituted with an alkyl group having 1 to 6 carbon atoms, an aryl group having 6 to 10 carbon atoms, an alkyl group having 1 to 6 carbon atoms, or an alkenyl group having 2 to 6 carbon atoms, and

$R^2$ and $R^3$ may be each independently an alkyl group having 1 to 6 carbon atoms, an alkenyl group having 2 to 6 carbon atoms or $-Si(R^4)(R^5)(R^6)$, and $R^4$ to $R^6$ may be each independently an alkyl group having 1 to 10 carbon atoms, an alkoxy group having 1 to 10 carbon atoms, a hydroxyl group, a halogen atom or a hydrogen atom.

In some embodiments, the compound having a structure represented by Formula 1 above may include a compound having a structure represented by any one of Formulas 2-1 to 2-4 below.

[Formula 2-1]

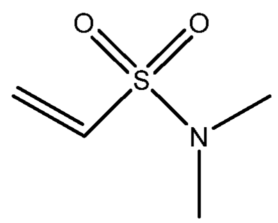

[Formula 2-2]

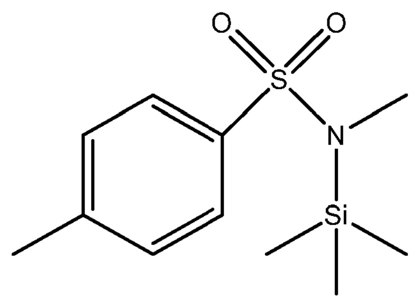

[Formula 2-3]

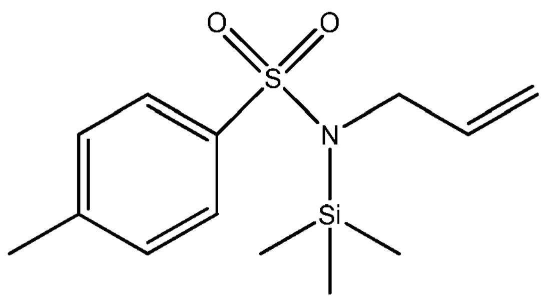

[Formula 2-4]

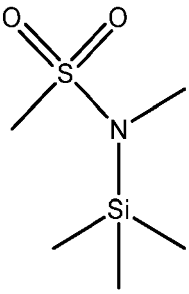

In some embodiments, the organic solvent may include at least one selected from the group consisting of a carbonate-based organic solvent, an ester-based organic solvent, an ether-based organic solvent, a ketone-based organic solvent and an aprotic organic solvent.

In some embodiments, the organic solvent may include a cyclic carbonate-based solvent and a linear carbonate-based solvent.

In some embodiments, a content of the additive may be 0.1% by weight to 10% by weight based on a total weight of the electrolyte.

In some embodiments, the electrolyte may further include at least one auxiliary additive selected from the group consisting of a cyclic carbonate compound, a fluorine-containing carbonate compound, a lithium phosphate compound, a sultone compound, a borate compound and a sulfate compound.

In some embodiments, the content of the auxiliary additive may be 0.01% by weight to 10% by weight based on the total weight of the electrolyte.

In some embodiments, the electrolyte may further include an auxiliary additive including a cyclic carbonate compound and a fluorine-containing carbonate compound.

A lithium secondary battery according to exemplary embodiments includes: an electrode assembly which include cathodes and anodes repeatedly stacked; and the above-described electrolyte for a lithium secondary battery, which is impregnated into the electrode assembly.

In some embodiments, the cathode may further include a cathode active material including a lithium phosphate-based active material.

In some embodiments, the cathode active material may include lithium metal phosphate particles having a structure represented by Formula 3 below.

[Formula 3] $Li_wM_xP_yO_{4+z}$

In Formula 3, w, x, y and z may satisfy $0.9 \leq w \leq 1.2$, $0.99 \leq x \leq 1.01$, $0.9 \leq y \leq 1.2$, $-0.1 \leq z \leq 0.1$.

M may be at least one selected from the group consisting of Fe, Ni, Mn, Ti and V

In some embodiments, M may be Fe.

The electrolyte for a lithium secondary battery according to exemplary embodiments may form a uniform and stable solid electrolyte interphase (SEI) with high ionic conductivity on the electrode surface.

Since the lithium secondary battery according to exemplary embodiments includes the electrolyte for a lithium secondary battery, it may exhibit improved low-temperature performance and high-temperature storage properties.

The electrolyte may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are aimed at mitigating climate change by reducing air pollution and greenhouse gas emission.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a plan view schematically illustrating a lithium secondary battery according to exemplary embodiments; and
FIG. 2 is a cross-sectional view schematically illustrating the lithium secondary battery according to exemplary embodiments.

[DETAILED DESCRIPTION OF THE INVENTION]

An electrolyte for a lithium secondary battery according to exemplary embodiments includes an additive including a compound having a specific structure, an organic solvent and a lithium salt.
In addition, the lithium secondary battery according to exemplary embodiments may include: an electrode assembly including cathodes and anodes repeatedly stacked; and an electrolyte for a lithium secondary battery, which is impregnated into the electrode assembly.
Accordingly, the cycle life properties and high-temperature storage properties of the lithium secondary battery may be improved.
As used herein, the "A compound" may refer to a compound including an A unit attached to a matrix, etc. of the "A compound" and a derivative thereof.

**<Electrolyte for a lithium secondary battery>**

The electrolyte for a lithium secondary battery according to exemplary embodiments (hereinafter, also abbreviated as the electrolyte) includes an additive including a compound having a structure represented by Formula 1 below, an organic solvent and a lithium salt.
Hereinafter, the components of the present disclosure will be described in more detail.

<u>Additive</u>

The electrolyte for a lithium secondary battery according to exemplary embodiments includes an additive including a compound having a structure represented by Formula 1 below.

[Formula 1]

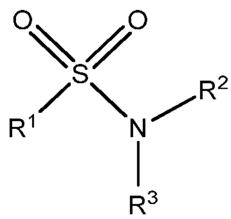

In Formula 1, $R^1$ is an aryl group having 6 to 12 carbon atoms in which at least one hydrogen atom is substituted with an alkyl group having 1 to 10 carbon atoms, an aryl group having 6 to 12 carbon atoms, an alkenyl group having 2 to 10 carbon atoms, an alkyl group having 1 to 10 carbon atoms, an alkoxy group having 1 to 10 carbon atoms, a hydroxyl group, or a hydrogen atom.
$R^2$ and $R^3$ are each independently an alkyl group having 1 to 10 carbon atoms, an alkenyl group having 2 to 10 carbon atoms or a substituted or unsubstituted silyl group.
For example, among the aryl groups, the aryl group substituted with an alkyl group may have one hydrogen atom substituted with the alkyl group, and the aryl group having 6 to 12 carbon atoms may be an unsubstituted aryl group.
For example, $R^1$ may be an aryl group having 6 to 10 carbon atoms in which at least one hydrogen atom is substituted with an alkyl group having 1 to 6 carbon atoms, an aryl group having 6 to 10 carbon atoms, an alkenyl group having 2 to 6 carbon atoms, an alkyl group having 1 to 6 carbon atoms, an alkoxy group having 1 to 6 carbon atoms, a hydroxyl group or hydrogen.
For example, $R^1$ may be an aryl group having 6 to 8 carbon atoms in which at least one hydrogen atom is substituted with an alkyl group having 1 to 4 carbon atoms, an aryl group having 6 to 8 carbon atoms, an alkenyl group having 2 to 4 carbon atoms, an alkyl group having 1 to 4 carbon atoms, an alkoxy group having 1 to 4 carbon atoms, a hydroxyl group or hydrogen.
For example, $R^1$ may be an aryl group having 6 to 12 carbon atoms in which at least one hydrogen atom is substituted with an alkyl group having 1 to 10 carbon atoms, an aryl group having 6 to 12 carbon atoms, an alkyl group having 1 to 10 carbon atoms, or an alkenyl group having 2 to 10 carbon atoms.
For example, $R^1$ may be an aryl group having 6 to 10 carbon atoms in which at least one hydrogen atom is substituted with an alkyl group having 1 to 6 carbon atoms, an aryl group having 6 to 10 carbon atoms, an alkyl group having 1 to 6 carbon atoms, or an alkenyl group having 2 to 6 carbon atoms.
For example, $R^1$ may be an aryl group having 6 to 8 carbon atoms in which at least one hydrogen atom is

substituted with an alkyl group having 1 to 4 carbon atoms, an aryl group having 6 to 8 carbon atoms, an alkyl group having 1 to 4 carbon atoms, or an alkenyl group having 2 to 4 carbon atoms.

Among the above-described aryl groups, the aryl group substituted with an alkyl group may have one hydrogen atom substituted with the alkyl group, and the other aryl groups may be unsubstituted aryl groups.

For example, $R^1$ may be a phenyl group in which at least one hydrogen atom is substituted with a methyl group, a phenyl group, a methyl group or an ethenyl group, and the phenyl group substituted with a methyl group may have one hydrogen atom substituted with a methyl group.

For example, $R^2$ and $R^3$ may each independently be: an alkyl group having 1 to 6 carbon atoms, an alkenyl group having 2 to 6 carbon atoms or a substituted or unsubstituted silyl group; an alkyl group having 1 to 4 carbon atoms, an alkenyl group having 2 to 4 carbon atoms or a substituted or unsubstituted silyl group; and a methyl group, a propenyl group or a substituted or unsubstituted silyl group, wherein the propenyl group may be a 2-propenyl group.

For example, the silyl group may have a structure represented by $-Si(R^4)(R^5)(R^6)$, and $R^4$ to $R^6$ may each independently be an alkyl group having 1 to 10 carbon atoms, an alkoxy group having 1 to 10 carbon atoms, a hydroxyl group, a halogen atom or a hydrogen atom.

For example, $R^4$ to $R^6$ may each independently be an alkyl group having 1 to 6 carbon atoms, an alkoxy group having 1 to 6 carbon atoms, a hydroxyl group, a halogen atom or a hydrogen atom, and $R^4$ to $R^6$ may each independently be an alkyl group having 1 to 4 carbon atoms, an alkoxy group having 1 to 4 carbon atoms, a hydroxyl group, a halogen atom or a hydrogen atom.

For example, $R^4$ to $R^6$ may each independently be an alkyl group having 1 to 10 carbon atoms, an alkyl group having 1 to 6 carbon atoms or an alkyl group having 1 to 4 carbon atoms, and all of $R^4$ to $R^6$ may be methyl groups.

For example, the above-described alkyl group, alkenyl group, alkoxy group, and the hydrogen atom of aryl group may each independently be substituted with at least one of an alkyl group having 1 to 6 carbon atoms, an alkenyl group having 2 to 6 carbon atoms, an alkoxy group having 1 to 6 carbon atoms, a cycloalkyl group having 3 to 7 carbon atoms, a 5- to 7-membered heterocycloalkyl group or an amino group.

In some embodiments, the compound having a structure represented by Formula 1 above may include a compound having a structure represented by any one of Formulas 2-1 to 2-4 below.

[Formula 2-1]

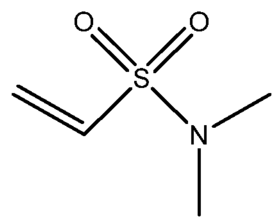

[Formula 2-2]

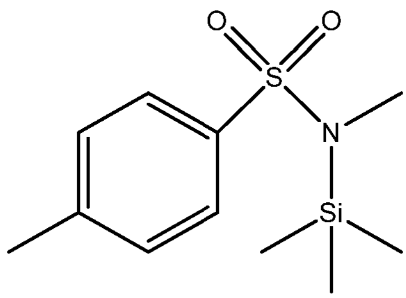

[Formula 2-3]

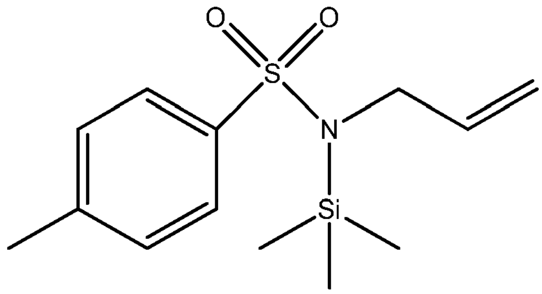

[Formula 2-4]

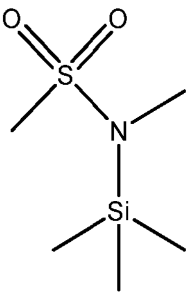

For example, when an additive including a compound having a structure represented by Formula 1 is included in the electrolyte for a lithium secondary battery, a uniform solid electrolyte interphase (SEI) film with high ionic conductivity may be formed on the electrode surface.

For example, since the additive has a strong tendency for reduction decomposition, a robust amine-based solid electrolyte interphase film may be formed on the electrode. Since the film stably protects the electrode surface, the electrode interface may be stabilized and side reactions with the electrolyte may be suppressed.

Accordingly, further decomposition of the lithium salt may be suppressed, such that the decomposition of the organic solvent at high temperatures may be effectively prevented, gas generation may be reduced, and an increase in battery thickness may be inhibited.

For example, the film formed by the additive may have low resistance and facilitate the migration of Li ions between the electrode and the electrolyte, thereby improving the discharge capacity at low temperatures.

If the compound included in the additive has an N-Si bond, moisture and HF remaining in the electrolyte may be removed, thereby enhancing the long-term performance of the battery.

If an aryl group or an alkenyl group is linked to the sulfonyl group in the compound, an SEI film having a stable structure even after long-term charge and discharge may be formed through $\pi$-$\pi$ interactions.

Therefore, the high-temperature storage properties, low-temperature performance, and cycle life properties of the lithium secondary battery may be improved.

In some embodiments, a content of the additive may be 0.1% by weight ("wt%") to 10 wt% based on the total weight of the electrolyte.

For example, the content of the additive may be 0.2 wt% to 8 wt%, 0.3 wt% to 5 wt%, 0.4 wit% to 3 wt%, 0.5 wt% to 2 wt%, or 0.1 wt% to 2 wt% based on the total weight of the electrolyte.

Within the above range, a more uniform SEI film with high ionic conductivity may be formed, and the migration of lithium ions and the activity of the cathode active material may not be significantly hindered.

## Auxiliary Additive

The electrolyte for a lithium secondary battery according to exemplary embodiments may further include at least one auxiliary additive selected from the group consisting of a cyclic carbonate compound, a fluorine-containing carbonate compound, a lithium phosphate compound, a sultone compound, a borate compound and a sulfate compound.

In some embodiments, the electrolyte may further include an auxiliary additive including a cyclic carbonate compound and a fluorine-containing carbonate compound, and for example, may further include an auxiliary additive consisting of a cyclic carbonate compound and a fluorine-containing carbonate compound.

When the additive and the auxiliary additive are used in combination, a lithium secondary battery with further improved low-temperature performance and high-temperature storage properties may be efficiently implemented.

For example, the cyclic carbonate compound may include vinylene carbonate (VC), vinyl ethylene carbonate (VEC), etc.

For example, the fluorine-containing carbonate compound may include a fluorine atom bonded to at least one carbon atom of the carbonate compound or a substituent to which the fluorine atom is bonded (for example, a fluorine-substituted alkyl group such as $-CF_3$).

In some embodiments, the fluorine-containing carbonate compound may include a fluorine-containing cyclic carbonate compound having a cyclic structure. For example, the fluorine-containing cyclic carbonate compound may have a 5- to 7-membered cyclic structure.

For example, the fluorine-containing cyclic carbonate compound may include fluoroethylene carbonate (FEC).

In some embodiments, the lithium phosphate compound may include a fluorine-containing lithium phosphate compound.

For example, the fluorine-containing lithium phosphate compound may include a fluorine atom bonded to a phosphorus atom of the lithium phosphate compound or a substituent to which the fluorine atom is bonded (for example, a fluorine-substituted alkyl group such as $-CF_3$).

In some embodiments, the fluorine-containing lithium phosphate compound may include at least one selected from the group consisting of lithium difluoro phosphate ($LiPO_2F_2$) and lithium difluoro(bis-oxalato) phosphate. For example, the fluorine-containing lithium phosphate compound may include lithium difluoro phosphate ($LiPO_2F_2$).

In some embodiments, the sultone compound may include at least one selected from the group consisting of an alkyl sultone compound and an alkenyl sultone compound.

In some embodiments, the sultone compound may include both an alkyl sultone compound and an alkenyl sultone compound.

For example, the alkyl sultone compound may include at least one selected from the group consisting of 1,3-propane sultone (PS) and 1,4-butene sultone.

For example, the alkenyl sultone compound may include at least one selected from the group consisting of ethene sultone, 1,3-propene sultone (PRS), 1,4-butene sultone and 1-methyl-1,3-propene sultone.

In some embodiments, the sulfate compound may include a cyclic sulfate compound having a cyclic structure. The cyclic sulfate compound may have a 5- to 7-membered cyclic structure.

For example, the cyclic sulfate compound may include at least one selected from the group consisting of 1,2-ethylene sulfate (ESA), trimethylene sulfate (TMS) and methyltrimethylene sulfate (MTMS).

For example, the cyclic sulfite compound may include ethylene sulfite, butylene sulfite, and the like.

For example, the borate compound may include lithium bis(oxalate) borate.

In one embodiment, a content of the auxiliary additive may be 0.01 wt% to 10 wt% based on the total weight of the electrolyte.

For example, the content of the auxiliary additive may be 0.05 wt% to 9 wt%, 0.5 wt% to 8 wt%, 0.8 wt% to 7 wt%, 1.0 wt% to 6 wt%, 1.5 wt% to 5 wt%, or 2 wt% to 4 wt% based on the total weight of the electrolyte.

Within the above range, the durability of the SEI may be enhanced without inhibiting the role of the additive.

In some embodiments, a ratio of the weight of the auxiliary additive to the weight of the additive in the electrolyte may be 0.1 to 15.

For example, the weight ratio may be 0.2 to 14, 0.3 to 13, 0.4 to 12, or 0.5 to 10. Within the above range, the high-temperature storage properties and low-temperature performance of the lithium secondary battery may be further improved.

In one embodiment, both a cyclic carbonate compound and a fluorine-containing carbonate compound may be used in combination as the auxiliary additive.

In some embodiments, the auxiliary additive may further include at least one selected from the group consisting of a borate compound, a nitrile compound, an amine compound, a silane compound and a benzene compound.

For example, the borate compound may include at least one selected from the group consisting of lithium tetraphenyl borate and lithium difluoro(oxalato)borate (LiODFB).

For example, the nitrile compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

For example, the amine compound may include at least one selected from the group consisting of triethanolamine and ethylene diamine fluorophenylacetonitrile.

For example, the silane compound may include tetravinyl silane, etc.

For example, the benzene compound may include at least one selected from the group consisting of monofluorobenzene, difluorobenzene, trifluorobenzene and tetrafluorobenzene.

**Organic solvent and lithium salt**

For example, the organic solvent may include an organic compound which provides sufficient solubility to the lithium salt, the additive and the auxiliary additive, and does not chemically react within the lithium secondary battery.
In some embodiments, the organic solvent may include at least one selected from the group consisting of a carbonate solvent, an ester solvent, an ether solvent, a ketone solvent, an alcohol solvent and an aprotic solvent.
In some embodiments, the organic solvent may include a carbonate solvent, and the carbonate solvent may include a linear carbonate solvent and a cyclic carbonate solvent.
For example, the linear carbonate solvent may include dimethyl carbonate (DMC), ethyl methyl carbonate (EMC), diethyl carbonate (DEC), methyl propyl carbonate, ethyl propyl carbonate, dipropyl carbonate and the like.
For example, the cyclic carbonate solvent may include ethylene carbonate (EC), propylene carbonate (PC), butylene carbonate and the like.
In some embodiments, the organic solvent may include the linear carbonate solvent in a greater volume than the cyclic carbonate solvent based on a volume.
In some embodiments, a ratio of the volume of the cyclic carbonate solvent to the volume of the linear carbonate solvent in the organic solvents may be 1/9 to 1. For example, the volume ratio may be 1/9 to 1, 1/9 to 2/3, 1/6 to 2/3, or 1/4 to 2/3. Within the above range, the high-temperature storage properties and low-temperature performance of the lithium secondary battery may be further improved.
For example, the ester solvent may include at least one of methyl acetate (MA), ethyl acetate (EA), n-propyl acetate (n-PA), 1,1-dimethylethyl acetate (DMEA), methyl propionate (MP), ethyl propionate (EP), $\gamma$-butyrolactone (GBL), decanolide, valerolactone, mevalonolactone and caprolactone.
For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.
For example, the ketone solvent may include cyclohexanone, etc.
For example, the alcohol solvent may include at least one of ethyl alcohol and isopropyl alcohol.
For example, the aprotic solvent may include at least one of a nitrile solvent, an amide solvent (e.g., dimethylformamide), a dioxolane solvent (e.g., 1,3-dioxolane), and a sulfolane solvent.
In some embodiments, the electrolyte may include a lithium salt.
The above lithium salt is represented by $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.
In some embodiments, the lithium salt may include at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.
In one embodiment, the lithium salt may include at least one selected from the group consisting of $LiPF_6$, LiFSI and LiTFSI.
In some embodiments, the lithium salt may be included in the organic solvent at a concentration of 0.01 M to 5 M, 0.01 M to 4 M, 0.5 M to 3 M, or 0.5 M to 2 M. Within the above concentration range, lithium ions and/or electrons may migrate smoothly during charging and discharging of the lithium secondary battery.

**<Lithium** secondary battery>

FIGS. 1 and 2 are schematic plan and cross-sectional views illustrating a lithium secondary battery according to exemplary embodiments, respectively. For example, FIG. 2 is a cross-sectional view taken on line I-I' in FIG. 1.
Referring to FIG. 1 and FIG. 2, the lithium secondary battery may include an electrode assembly 150 including a cathode 100, an anode 130, and a separation membrane 140 interposed between the cathode and the anode.
For example, the electrode assembly 150 may include the cathodes 100 and the anodes 130, which are repeatedly stacked, and the electrode assembly 150 may be housed in a case 160 together with the electrolyte according to the above-described exemplary embodiments to be impregnated therein.
The cathode 100 may include a cathode current collector 105 and a cathode active material layer 110 disposed on at least one surface of the cathode current collector 105.
The cathode current collector 105 may include stainless steel, nickel, aluminum, titanium, or an alloy thereof. The cathode current collector may also include aluminum or stainless steel having a surface treated with carbon, nickel, titanium, or silver. The cathode current collector may have a thickness of 10 $\mu$m to 50 $\mu$m, but it is not limited thereto.
For example, the cathode active material may include a compound capable of reversibly intercalating and deintercalating lithium ions.

In some embodiments, the cathode 100 may include a cathode active material including a lithium phosphate-based active material.

In some embodiments, the cathode active material may include lithium metal phosphate particles having a structure represented by Formula 3 below.

[Formula 3] $Li_wM_xP_yO_{4+z}$

In Formula 3, w, x, y and z may satisfy $0.9 \leq w \leq 1.2$, $0.99 \leq x \leq 1.01$, $0.9 \leq y \leq 1.2$, $-0.1 \leq z \leq 0.1$, and M may be at least one selected from the group consisting of Fe, Ni, Mn, Ti and V

For example, M may be Fe, and the cathode active material may include a lithium iron phosphate (LFP) active material (e.g., $LiFePO_4$).

The chemical structure represented by Formula 3 indicates a bonding relationship between elements included in the crystal structure of the cathode active material, and does not exclude other additional elements. For example, M includes Fe, and Fe may be provided as a main active element of the cathode active material. Here, it should be understood that Formula 3 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the crystal structure.

The auxiliary elements may be incorporated together in the crystal structure together the main active elements to form a bond, and it should be understood that this case is also included within the chemical structure range represented by Formula 3.

The auxiliary elements may include, for example, at least one ofNa, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or doping element may exist on the surface of the lithium metal phosphate particles, or may penetrate through the surface of the lithium metal phosphate particles to be included in the bonding structure represented by Formula 3 above.

The lithium iron phosphate (LFP) active material has an olivine structure, which is much more stable than a layered structure, and may also provide excellent long-term cycle life. For example, when the above-described additive is included in the electrolyte, the low-temperature performance, such as the output properties of the battery at sub-zero temperatures, may be improved.

In some embodiments, the cathode active material may include a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material having a chemical structure or crystal structure represented by Formula 4 below, a lithium (Li)-rich layered oxide (LLO)/over lithiated oxide (OLO)-based active material, or a cobalt (Co)-less active material.

For example, the cathode active material may include a chemical structure or crystal structure represented by Formula 4 below.

[Formula 4] $p[Li_2MnO_3] \cdot (1-p)[LiqJO_2]$

In Formula 4, p and q may satisfy $0<p<1$, $0.9 \leq q \leq 1.2$, and J may include at least one element among Mn, Ni, Fe, Cr, V, Cu, Zn, Ti, Al, Mg and B.

For example, the cathode active material may be dispersed in a solvent to prepare a cathode slurry. The cathode current collector 105 may be coated with the cathode slurry, and then dried and pressed to prepare the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally further include a conductive material, a thickener or the like.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode slurry layer and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$.

As the thickener, for example, carboxymethyl cellulose (CMC) may be used.

The anode 130 may include an anode current collector 125 and an anode active material layer 120 disposed on at least one surface of the anode current collector 125.

For example, non-limiting examples of the anode current collector 125 may include a copper foil, a nickel foil, a stainless steel foil, a titanium foil, a nickel foam, a copper foam, a polymer substrate coated with conductive metal and the like. The anode current collector may have a thickness of 10 μm to 50 μm, but it is not limited thereto.

The anode slurry layer may include an anode active material. A material capable of intercalating and deintercalating lithium ions may be used as the anode active material. For example, the anode active material may include carbon-based materials such as crystalline carbon, amorphous carbon, a carbon composite, or carbon fibers, etc.; lithium metal; a lithium alloy; a silicon (Si)-containing material or a tin (Sn)-containing material, etc.

Examples of the amorphous carbon include hard carbon, soft carbon, cokes, mesocarbon microbeads (MCMBs), mesophase pitch-based carbon fibers (MPCF), etc.

Examples of the crystalline carbon include graphite-based carbon such as natural graphite, artificial graphite, graphitized coke, graphitized MCMB, and graphitized MPCF.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity properties. The silicon-containing material may include Si, $SiO_x$ ($0<x<2$), a silicon-carbon composite, a metal-doped silicate or $SiO_x$ ($0<x<2$), etc. The metal may include lithium and/or magnesium.

For example, the anode active material may be dispersed in a solvent to prepare an anode mixture. The anode current collector may be coated with the anode mixture, and then dried and pressed to prepare an anode. The coating process may be performed using methods such as gravure coating, slot die coating, simultaneous multilayer die coating, imprinting, doctor blade coating, dip coating, bar coating or casting, etc., but it is not limited thereto. The anode slurry may further include a binder, and optionally further include a conductive agent, a thickener or the like.

In some embodiments, the anode may include an anode active material layer in the form of a lithium metal formed through a deposition/coating process.

Non-limiting examples of the solvent for the anode slurry may include water, pure water, deionized water, distilled water, ethanol, isopropanol, methanol, acetone, n-propanol, t-butanol and the like.

The above-described materials that can be used when preparing the cathode as the binder, conductive material and thickener may be used.

For example, as the anode binder, a styrene-butadiene rubber (SBR)-based binder, a polyacrylic acid-based binder, a poly(3,4-ethylenedioxythiophene, PEDOT)-based binder, etc., may be used, which may be used in combination with a thickener such as carboxymethyl cellulose (CMC).

In one embodiment, the separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 μm to 20 μm, but in the present disclosure, it is not limited thereto.

The separation membrane may include a porous polymer film or a porous nonwoven fabric. The porous polymer film may include a polyolefin-based polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, etc.

The separation membrane may also include a ceramic-based material. For example, inorganic particles may be applied to the polymer film or dispersed within the polymer film to improve heat resistance.

The separation membrane may have a single-layer or multi-layer structure including the above-described polymer film and/or non-woven fabric.

According to exemplary embodiments, the cathode 100, the anode 130 and the separation membrane 140 may be repeatedly disposed to form an electrode assembly 150. In some embodiments, the electrode assembly 150 may have a jelly roll shape formed by winding, stacking, z-folding, or stack-folding the separation membrane 140.

In one embodiment, the electrode assembly 150 may have a jelly roll shape formed by winding the cathode 100,

the anode 130 and the separation membrane 140 together. In one embodiment, the electrode assembly 150 may have a jelly roll shape in which the notched cathodes and anodes are disposed in a space formed by repeatedly z-folding the separation membrane 140.

In one embodiment, the electrode assembly may be formed by repeatedly stacking the cathodes, anodes, and separation membranes with the respective layers being cut or separated from each other.

For example, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead(107) and an anode lead(127)) that extend or are exposed to the outside of the case 160.

For example, a pouch-type case, a prismatic case, a cylindrical case, a coin-type case, etc. may be used to house the battery.

The electrode assembly 150 may be housed in the case 160 together with the electrolyte to define a lithium secondary battery.

<Preparative Example>

**(1) Synthesis Example of Additive I (N,N-dimethylethenesulfonamide)**

Dimethylamine hydrochloride (2.35 g, 28.8 mmol), triethylamine (18.1 mL, 129.6 mmol), and 80 mL of dichloromethane were sequentially introduced into a round-bottom flask and stirred. After cooling the stirred solution to 0°C, 2-chloroethanesulfonyl chloride (3.0 mL, 28.8 mmol) diluted with 10 mL of dichloromethane was slowly added to the stirred solution, and the mixture was stirred for 2 hours while maintaining the temperature at 0°C.

After completion of stirring, the stirred solution was washed with distilled water and a saturated sodium chloride aqueous solution. Thereafter, the organic layer was concentrated under reduced pressure to remove the solvent, and purified by silica gel column chromatography to obtain 2.6 g of additive I as a yellow liquid having a structure represented by Formula 2-1 below (yield 66%). The $^1$H-NMR analysis results for additive I are as follows.

$^1$H-NMR(500MHz, CDCl3): 6.44(1H, m), 6.25(1H, d), 6.06(1H, d), 2.80(6H, s)

[Formula 2-1]

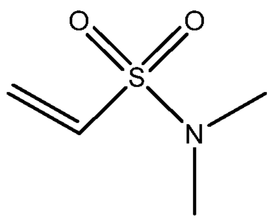

**(2) Synthesis** Example of **Additive II (N,4-dimethyl-N-(trimethylsilyl)benzenesulfonamide)**

N-methyl-p-toluenesulfonamide (1.85 g, 10 mmol), Tetrahydrofuran(THF,10 mL), and triethylamine (TEA, 1.48 mL, 10.5 mmol) were sequentially introduced into a round-bottom flask and cooled to 0°C. While maintaining 0°C, trimethylsilyl chloride (1.52 mL, 12 mmol) was slowly added dropwise to the mixture over 30 minutes, and then the mixture was stirred at room temperature for 3 hours.

The stirred solution was filtered under reduced pressure to remove byproducts, and purified using a silica filter to obtain 2.3 g of additive II as a colorless liquid having a structure represented by Formula 2-2 below. The $^1$H-NMR analysis results for additive II are as follows.

$^1$H-NMR($CDCl_3$, 500MHz): 7.70(d, 2H), 7.27(d, 2H), 2.65(s, 3H), 2.41(s, 3H), 0.36(s, 9H)

[Formula 2-2]

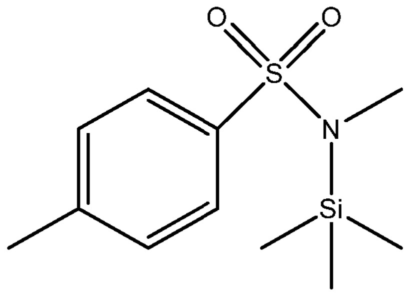

**(3) Synthesis** Example of **Additive II (N-allyl-4-methyl-N-(trimethylsilyl)benzenesulfonamide)**

N-allyl-p-toluenesulfonamide (2.12 g, 10 mmol), methylene chloride (MC, 30 mL), and pyridine (0.89 mL, 11 mmol) were sequentially introduced into a round-bottom flask and cooled to 0°C. While maintaining 0°C, trimethylsilyl chloride (1.52 mL, 12 mmol) was slowly added dropwise to the mixture over 30 minutes, and then the mixture was stirred at room temperature for 3 hours.

The stirred solution was filtered under reduced pressure to remove byproducts, and purified using a silica filter to obtain 2.6 g of additive III as a colorless liquid having a structure represented by Formula 2-3 below. The $^1$H-NMR analysis results for additive III are as follows.

$^1$H-NMR($CDCl_3$, 500MHz): 7.75(dd, 2H), 7.30(dd, 2H), 5.75(m, 1H), 5.10(m,2H), 3.58(m, 2H) 2.65(s, 3H), 0.37(s, 9H)

[Formula 2-3]

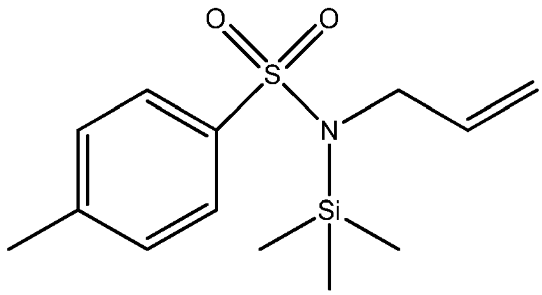

**(4) Synthesis Example of Additive IV (N-methyl-N-(trimethylsilyl)methanesulfonamide)**

N-Methylmethanesulfonamide (1.09 g, 10 mmol), methylene chloride (MC, 20 mL), and pyridine (0.89 mL, 11 mmol) were sequentially introduced into a round-bottom flask and cooled to 0°C. While maintaining 0°C, trimethylsilyl chloride (1.52 mL, 12 mmol) was slowly added dropwise to the mixture over 30 minutes, and then the mixture was stirred at room temperature for 3 hours.

The stirred solution was filtered under reduced pressure to remove byproducts, and purified using a silica filter to obtain 1.3 g of additive IV as a colorless liquid having a structure represented by Formula 2-4 below. The $^1$H-NMR analysis results for additive IV are as follows.

$^1$H-NMR($CDCl_3$, 500MHz): 3.11(s,3H), 1.43(s, 3H), 0.37(s, 9H)

[Formula 2-4]

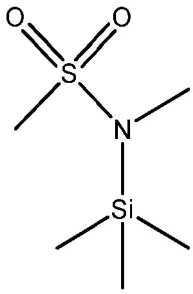

(5) Synthesis Example of Additive V (ethenesulfonyl fluoride)

The structure represented by Formula 5-1 below was purchased and used as a reagent from TCI. Reagent name: Ethenesulfonyl Fluoride (TCI, V0143)

[Formula 5-1]

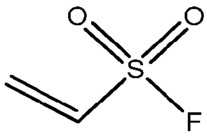

(6) Synthesis Example of Additive VI (trimethylsilyl 4-methylbenzenesulfonate)

Sodium p-toluenesulfonate (1.94 g, 10 mmol) and Tetrahydrofuran(THF, 20 mL) were sequentially introduced into a round bottom flask and cooled to 0°C. While maintaining 0°C, trimethylsilyl chloride (1.52 mL, 12 mmol) was slowly added dropwise to the mixture over 30 minutes, and then the mixture was stirred at room temperature for 3 hours.

The stirred solution was filtered under reduced pressure to remove byproducts, and purified using a silica filter to obtain 1.3 g of additive VI as a colorless liquid having a structure represented by Formula 5-2 below.

[Formula 5-2]

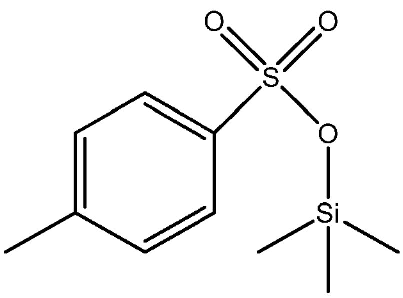

**<Examples and Comparative Examples>**

Example 1

(1) Preparation of electrolyte

A 1.2 M $LiPF_6$ solution (a mixed solvent of ethylene carbonate (EC)/ ethyl methyl carbonate (EMC) in a volume ratio of 25:75) was prepared.

Based on the total weight of the electrolyte (100 wt%), 1 wt% of fluoroethylene carbonate (FEC), and 2 wt% of vinylene carbonate (VC) were added to the $LiPF_6$ solution, and 0.5 wt% of additive I having a structure represented by Formula 2-1 below was further added to prepare an electrolyte.

[Formula 2-1]

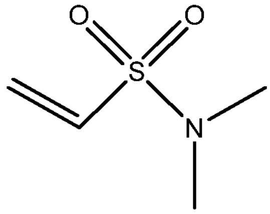

## (2) Manufacturing of lithium secondary battery sample

A cathode slurry was prepared by mixing and dispersing $LiFePO_4$ as a cathode active material, carbon nanotubes as a conductive material, and polyvinylidene fluoride (PVdF) as a binder in a weight ratio of 97:1:2 in N-methyl-2-pyrrolidone (NMP).

The cathode slurry was uniformly applied to a region of an aluminum foil (thickness: 15 μm) having a protrusion part (cathode tab) on one side except for the protrusion part, and then dried and pressed to prepare a cathode.

An anode slurry was prepared by mixing an anode active material obtained by mixing artificial graphite and natural graphite in a weight ratio of 7:3, graphite as a conductive material, and a binder obtained by mixing styrene-butadiene rubber (SBR) and a thickener in a weight ratio of 1:1, in distilled water in a weight ratio of 95:3:2.

The anode slurry was uniformly applied to a copper foil (thickness: 15 μm) having a protrusion part (anode tab) on one side, except for the protrusion part, and then dried and pressed to prepare an anode.

An electrode assembly was formed by interposing a polyethylene separation membrane (thickness: 20 μm) between the cathode and the anode. Next, a cathode lead and an anode lead were welded and connected to the cathode tab and the anode tab, respectively.

The electrode assembly was housed in a pouch (case) so that some regions of the cathode lead and the anode lead were exposed to the outside of the pouch, followed by sealing three sides of the pouch except for the side with an electrolyte injection port.

After inj ecting the electrolyte prepared in the above (1) and sealing the side of the electrolyte injection part, a lithium secondary battery was manufactured by allowing it to be impregnated for 12 hours.

## Example 2

An electrolyte and a lithium secondary battery sample were manufactured in the same manner as in Example 1, except that 0.5 wt% of additive II having a structure represented by Formula 2-2 below was used instead of additive I.

[Formula 2-2]

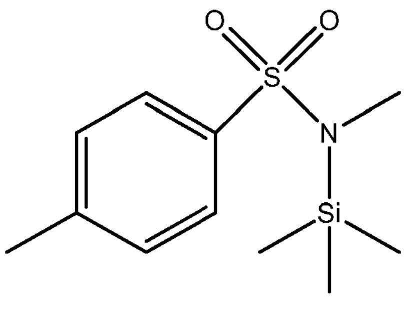

## Example 3

An electrolyte and a lithium secondary battery sample were manufactured in the same manner as in Example 1, except that 0.5 wt% of additive III having a structure represented by Formula 2-3 below was used instead of additive I.

[Formula 2-3]

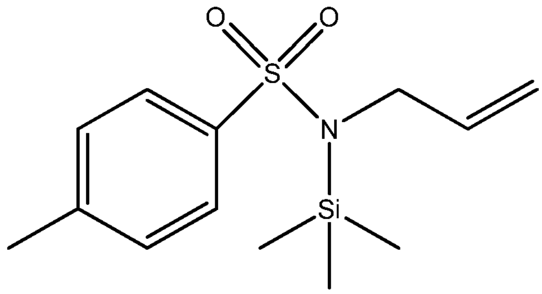

**Example 4**

An electrolyte and a lithium secondary battery sample were manufactured in the same manner as in Example 1, except that 0.5 wt% of additive IV having a structure represented by Formula 2-4 below was used instead of additive I.

[Formula 2-4]

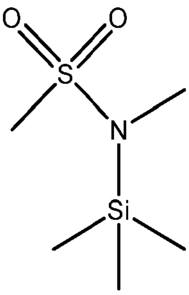

**Comparative Example 1**

An electrolyte and a lithium secondary battery sample were manufactured in the same manner as in Example 1, except that 0.5 wt% of lithium difluorophosphate ($LiPO_2F_2$) was used instead of additive I.

**Comparative Example 2**

An electrolyte and a lithium secondary battery sample were manufactured in the same manner as in Example 1, except that 0.5 wt% of additive V having a structure represented by Formula 5-1 below was used instead of additive I.

[Formula 5-1]

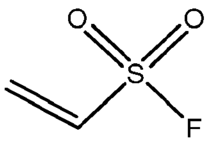

**Comparative Example 3**

An electrolyte and a lithium secondary battery sample were manufactured in the same manner as in Example 1, except that 0.5 wt% of additive VI having a structure represented by Formula 5-2 below was used instead of additive I.

[Formula 5-2]

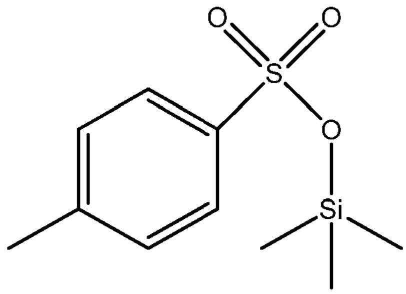

The electrolyte compositions of the examples and comparative examples are described in Table 1 below.

**[TABLE 1]**

| | Lithium salt | Additive (wt%) | Auxiliary additive (wt%) | | |
|---|---|---|---|---|---|
| | | | FEC | VC | W3 |
| Example 1 | $LiPF_6$ (1.2M) | Additive I (0.5) | 1 | 2 | - |
| Example 2 | $LiPF_6$ (1.2M) | Additive II (0.5) | 1 | 2 | - |
| Example 3 | $LiPF_6$ (1.2M) | Additive III (0.5) | 1 | 2 | - |
| Example 4 | $LiPF_6$ (1.2M) | Additive IV (0.5) | 1 | 2 | - |
| Comparative Example 1 | $LiPF_6$ (1.2M) | - | 1 | 2 | 0.5 |
| Comparative Example 2 | $LiPF_6$ (1.2M) | Additive V (0.5) | 1 | 2 | - |
| Comparative Example 3 | $LiPF_6$ (1.2M) | Additive VI (0.5) | 1 | 2 | - |

The components described in Table 1 are as follows.

Additive I: N,N-dimethylethenesulfonamide
Additive II: N,4-dimethyl-N-(trimethylsilyl)benzenesulfonamide
Additive III: N-allyl-4-methyl-N-(trimethylsilyl)benzenesulfonamide
Additive IV: N-methyl-N-(trimethylsilyl)methanesulfonamide
Additive V: Ethenesulfonyl fluoride
Additive VI: Trimethylsilyl 4-methylbenzenesulfonate
FEC: Fluoroethylene carbonate
VC: Vinylene carbonate
W3: Lithium difluorophosphate ($LiPO_2F_2$)

**<Experimental Example>**

**Experimental Example 1: Evaluation of initial capacity**

(1) Evaluation of initial capacity

The lithium secondary batteries of the examples and comparative examples were charged at 0.5C-rate CC/CV (3.65V, 0.05C cut-off), and then discharged at 0.5C-rate CC (2.5V cut-off) three times, all at 25°C.

The discharge capacity values obtained in the third cycle were defined as the initial capacity of the lithium secondary batteries, and the result values are described in Tables 2 and 3 below.

(2) Evaluation of initial resistance (C DCIR and D DCIR) (at 25°C)

For the lithium secondary batteries of the examples and comparative examples, charging and discharging were performed at each corresponding C-rate for 10 seconds, while sequentially varying the C-rate to 0.2C, 0.5C, 1.0C, 1.5C, 2.0C, 2.5C and 3.0C at a 60% state-of-charge (SOC) point at 25°C. Then, the terminal voltage points were plotted to

construct a linear equation, and the slope of the resulting line was adopted as the DCIR. The measured values are listed in Tables 2 and 3 below.

**Experimental Example 2: Evaluation of low-temperature performance**

(1) Evaluation of low-temperature resistance

After the lithium secondary batteries of the examples and comparative examples were left in a chamber at -10°C for 4 hours, low-temperature resistance evaluations (C_DCIR and D_DCIR) were performed.

The low-temperature resistance evaluation was conducted in the same manner as the resistance evaluation in (2) of Experimental Example 1, and the measured values are described in Tables 2 and 3.

(2) Evaluation of low-temperature discharge capacity

The lithium secondary batteries of the examples and comparative examples were charged at -10°C for 2 hours at 0.58 A, 3.65V CC-CV Thereafter, the discharge capacity value and the usable capacity (Ret.) (%) compared to the initial capacity were measured after discharging to 2.5V CC at a current of 0.58 A. The measured values are recorded in Tables 2 and 3.

**Experimental Example 3: Evaluation of high-temperature storage properties (at 60°C)**

(1) Evaluation of resistance after high-temperature storage

After the lithium secondary batteries of the examples and comparative examples were left under ambient exposure conditions at 60°C for 13 weeks (using a thermostatic device), and charging and discharging were performed at each corresponding C-rate for 10 seconds, while sequentially varying the C-rate to 0.2C, 0.5C, 1.0C, 1.5C, 2.0C and 2.5C at a 60% state-of-charge (SOC) point at 25°C. Then, the terminal voltage points were plotted to construct a linear equation, and the slope of the resulting line was adopted as the DCIR.

The DCIR measured during the initial resistance evaluation was defined as R1, and the DCIR measured during the resistance evaluation after high-temperature storage was defined as R2. The DCIR increase rate was calculated as follows, and the results are shown in Tables 2 and 3 below.

$$\text{DCIR increase rate (\%)} = \{(R2\text{-}R1)/R1 + 1\} \times 100$$

(2) Measurement of battery thickness after high-temperature storage

The lithium secondary batteries of the examples and comparative examples were subjected to 0.5C CC/CV charge at 0.5C CC/CV (3.65V 0.05C CUT-OFF) to 100% SOC at 25°C, then the battery thickness T1 was measured. After leaving the charged lithium secondary batteries of the examples and comparative examples under ambient exposure conditions at 60°C for 13 weeks (using the thermostatic device), the battery thickness T2 was measured.

The battery thickness was measured using a flat thickness measuring device (Mitutoyo, 543-490B). The battery thickness increase rate was calculated as follows, and the results are shown in Tables 2 and 3 below.

$$\text{Battery thickness increase rate (\%)} = \{(T2\text{-}T1)/T1 + 1\} \times 100$$

(3) Measurement of capacity retention rate (Ret.) after high-temperature storage

The lithium secondary batteries of the examples and comparative examples were repeatedly subjected to 0.5C CC/CV charging (3.65 V, 0.05C CUT-OFF) and 0.5C CC discharge (2.5V CUT-OFF) at 25°C for three times, and the discharge capacity C1 was measured at the third time.

The lithium secondary batteries charged to 100% SOC were stored at 60°C for 13 weeks, then left at room temperature for an additional 30 minutes, and 0.5C CC discharge (2.5V CUT-OFF) was performed to measure the discharge capacity C2. The capacity retention ratewas calculated as follows and is shown in Tables 2 and 3 below.

$$\text{Capacity retention rate (\%)} = C2/C1 \times 100$$

(4) Measurement of capacity recovery rate (Rec.) after high-temperature storage

The discharge capacity C1 and discharge capacity C2 of the lithium secondary batteries of the examples and comparative examples were measured according to the capacity retention rate (Ret.) measurement method in (3) above. Then, 0.5C-rate CC/CV charging (3.65V, 0.05C cut-off) and 0.5 C-rate CC discharge (2.5V cut-off) were performed to measure discharge capacity C3.

The capacity recovery rate was calculated as follows, and the results are described in Tables 2 and 3 below.

$$\text{Capacity recovery rate (\%)} = C3/C1 \times 100$$

**Experimental Example 4: Evaluation of cycle life properties (at 45°C)**

The lithium secondary batteries of the examples and comparative examples were charged at 1C to 3.65V at 45°C and discharged at 1C to 2.5V The charging and discharging were repeated 600 times, and the discharge capacity C4 at the 600th cycle was measured.

The capacity retention rate was calculated as follows, and the results are described in Tables 2 and 3 below.

$$\text{Capacity retention rate (\%)} = C4/C1 \times 100$$

**[TABLE 2]**

| | | Example 1 | Example 2 | Example 3 | Example 4 |
|---|---|---|---|---|---|
| Initial performance | Capacity (mAh) | 1103 | 1091 | 1093 | 1102 |
| | C_DCIR (mΩ) | 59.2 | 57.4 | 65.2 | 62.5 |
| | D_DCIR (mΩ) | 56 | 45.8 | 56.8 | 56.9 |
| Low-temperature | C_DCIR (mΩ) | 313.2 | 270.9 | 330.5 | 315.5 |
| Performance (at -10°C) | D_DCIR (mΩ) | 166 | 175.8 | 176.4 | 172.7 |
| | Discharge capacity (mAh) | 437 | 461 | 452 | 473 |
| | Ret. (%) | 40.9 | 42.2 | 41.2 | 41.8 |
| High-temperature storage properties (at 60°C for 13 weeks) | Thickness increase rate (%) | 104 | 94 | 96 | 95 |
| | D_DCIR increase rate (%) | 120 | 151 | 155 | 150 |
| | Ret. (%) | 82 | 83 | 83 | 83 |
| | Rec. (%) | 84 | 84 | 84 | 84 |
| High-temperature life 1) (at 45°C, 600th cycle) | Capacity retention rate (%) | 88 | 88 | 88 | 88 |
| | Discharge capacity (mAh) | 1022 | 1002 | 1000 | 1015 |
| 1) 1C/1C 600 times at 45°C | | | | | |

**[TABLE 3]**

| | | Comparative Example 1 | Comparative Example 2 | Comparative Example 3 |
|---|---|---|---|---|
| Initial performance | Capacity (mAh) | 1108 | 1109 | 1096 |
| | C_DCIR (mΩ) | 65.4 | 66.9 | 64.0 |
| | D_DCIR (mΩ) | 57.1 | 55.7 | 57.2 |

(continued)

| | | Comparative Example 1 | Comparative Example 2 | Comparative Example 3 |
|---|---|---|---|---|
| Low-temperature Performance (at -10°C) | C_DCIR (mΩ) | 334.7 | 350.1 | 350.2 |
| | D_DCIR (mΩ) | 185.5 | 179.4 | 178.6 |
| | Discharge capacity (mAh) | 445 | 433 | 465 |
| | Ret. (%) | 39.9 | 39.1 | 40.7 |
| High-temperature storage properties (at 60°C for 13 weeks) | Thickness increase rate (%) | 97 | 96 | 100 |
| | D_DCIR increase rate (%) | 170 | 162.2 | 165.3 |
| | Ret. (%) | 82 | 82 | 82 |
| | Rec. (%) | 83 | 83 | 83 |
| High-temperature life [1] (at 45°C, 600th cycle) | Capacity retention rate (%) | 88 | 88 | 87 |
| | Discharge capacity (mAh) | 1007 | 1016 | 1016 |
| [1] 1C/1C, 600 times at 45°C | | | | |

Referring to Tables 1 to 3 above, the lithium secondary batteries of the examples exhibited improved low-temperature performance (at -10°C), high-temperature storage properties (at 60°C), and enhanced cycle life properties (increased capacity retention rate).

On the other hand, in the lithium secondary batteries of Comparative Examples 1 to 3, which did not use an additive including a compound having a specific structure or use an additive including a compound having a different structure, the C_DCIR and D_DCIR values during the low-temperature resistance evaluation were high, and the high-temperature capacity retentionrate and capacity recovery rate were low.

The contents described above are merely examples of applying the principles of the present disclosure, and other configurations may be further included without departing from the scope of the present disclosure.

## Claims

**1.** An electrolyte for a lithium secondary battery comprising:

an additive which comprises a compound having a structure represented by Formula 1 below;
an organic solvent; and
a lithium salt:

[Formula 1]

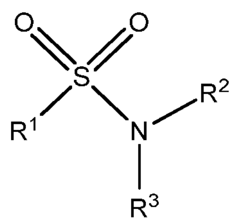

(in Formula 1, $R^1$ is an aryl group having 6 to 12 carbon atoms in which at least one hydrogen atom is substituted with an alkyl group having 1 to 10 carbon atoms, an aryl group having 6 to 12 carbon atoms, an alkenyl group having 2 to 10 carbon atoms, an alkyl group having 1 to 10 carbon atoms, an alkoxy group having 1 to 10 carbon atoms, a hydroxyl group or a hydrogen atom, and
$R^2$ and $R^3$ are each independently an alkyl group having 1 to 10 carbon atoms, an alkenyl group having 2 to 10 carbon atoms or a substituted or unsubstituted silyl group).

2. The electrolyte for a lithium secondary battery according to claim 1, wherein $R^1$ is an aryl group having 6 to 10 carbon atoms in which at least one hydrogen atom is substituted with an alkyl group having 1 to 6 carbon atoms, an aryl group having 6 to 10 carbon atoms, an alkenyl group having 2 to 6 carbon atoms, an alkyl group having 1 to 6 carbon atoms, an alkoxy group having 1 to 6 carbon atoms, a hydroxyl group or hydrogen, and
$R^2$ and $R^3$ are each independently an alkyl group having 1 to 6 carbon atoms, an alkenyl group having 2 to 6 carbon atoms or a substituted or unsubstituted silyl group.

3. The electrolyte for a lithium secondary battery according to claims 1 or 2, wherein $R^1$ is an aryl group having 6 to 12 carbon atoms in which at least one hydrogen atom is substituted with an alkyl group having 1 to 10 carbon atoms, an aryl group having 6 to 12 carbon atoms, an alkyl group having 1 to 10 carbon atoms, or an alkenyl group having 2 to 10 carbon atoms, and
$R^2$ and $R^3$ are each independently an alkyl group having 1 to 10 carbon atoms, an alkenyl group having 2 to 10 carbon atoms or a substituted or unsubstituted silyl group.

4. The electrolyte for a lithium secondary battery according to claims 1 to 3, wherein $R^1$ is an aryl group having 6 to 10 carbon atoms in which at least one hydrogen atom is substituted with an alkyl group having 1 to 6 carbon atoms, an aryl group having 6 to 10 carbon atoms, an alkyl group having 1 to 6 carbon atoms, or an alkenyl group having 2 to 6 carbon atoms, and
$R^2$ and $R^3$ are each independently an alkyl group having 1 to 6 carbon atoms, an alkenyl group having 2 to 6 carbon atoms or $-Si(R^4)(R^5)(R^6)$, and $R^4$ to $R^6$ are each independently an alkyl group having 1 to 10 carbon atoms, an alkoxy group having 1 to 10 carbon atoms, a hydroxyl group, a halogen atom or a hydrogen atom.

5. The electrolyte for a lithium secondary battery according to claims 1 to 4, wherein the compound having a structure represented by Formula 1 above comprises a compound having a structure represented by any one of Formulas 2-1 to 2-4 below:

[Formula 2-1]

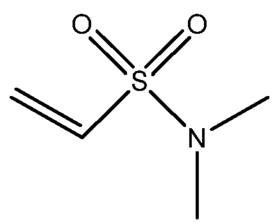

[Formula 2-2]

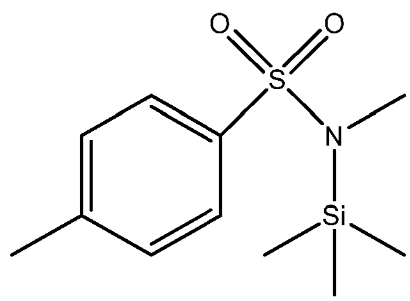

[Formula 2-3]

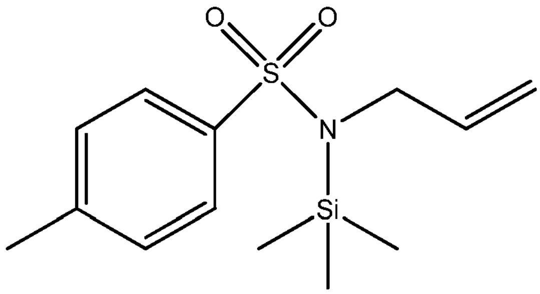

[Formula 2-4]

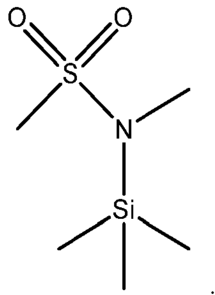

6. The electrolyte for a lithium secondary battery according to claims 1 to 5, wherein the organic solvent comprises at least one selected from the group consisting of a carbonate-based organic solvent, an ester-based organic solvent, an ether-based organic solvent, a ketone-based organic solvent and an aprotic organic solvent.

7. The electrolyte for a lithium secondary battery according to claims 1 to 6, wherein the organic solvent comprises a cyclic carbonate-based solvent and a linear carbonate-based solvent.

8. The electrolyte for a lithium secondary battery according to claims 1 to 7, wherein a content of the additive is 0.1% by weight to 10% by weight based on a total weight of the electrolyte.

9. The electrolyte for a lithium secondary battery according to claims 1 to 8, wherein the electrolyte further comprises at least one auxiliary additive selected from the group consisting of a cyclic carbonate compound, a fluorine-containing carbonate compound, a lithium phosphate compound, a sultone compound, a borate compound and a sulfate compound.

10. The electrolyte for a lithium secondary battery according to claim 9, wherein the content of the auxiliary additive is 0.01% by weight to 10% by weight based on the total weight of the electrolyte.

11. The electrolyte for a lithium secondary battery according to claims 1 to 10, wherein the electrolyte further comprises an auxiliary additive comprising a cyclic carbonate compound and a fluorine-containing carbonate compound.

12. A lithium secondary battery comprising:

an electrode assembly which comprise cathodes and anodes repeatedly stacked; and
the electrolyte for a lithium secondary battery according to claims 1 to 11, which is impregnated into the electrode assembly.

13. The lithium secondary battery according to claim 12, wherein the cathode comprises a cathode active material including a lithium phosphate-based active material.

14. The lithium secondary battery according to claim 13, wherein the cathode active material comprises lithium metal

phosphate particles having a structure represented by Formula 3 below:

[Formula 3] $Li_wM_xP_yO_{4+z}$

(in Formula 3, w, x, y and z satisfy $0.9 \leq w \leq 1.2$, $0.99 \leq x \leq 1.01$, $0.9 \leq y \leq 1.2$, $-0.1 \leq z \leq 0.1$, and M is at least one selected from the group consisting of Fe, Ni, Mn, Ti and V).

**15.** The lithium secondary battery according to claim 14, wherein M is Fe.

[FIG. 1]

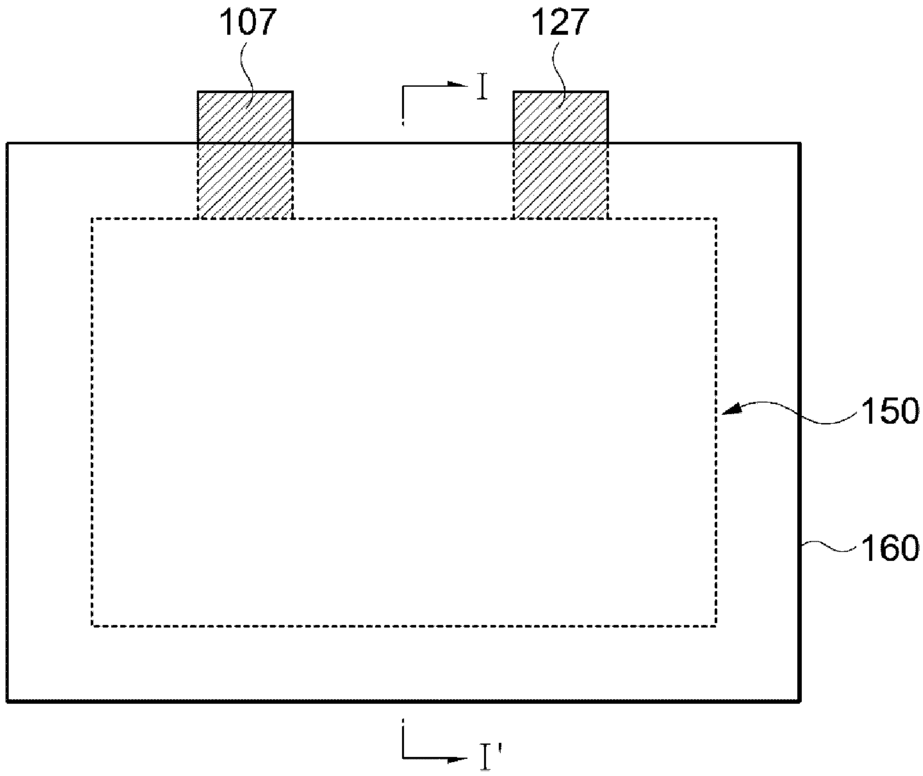


[FIG. 2]

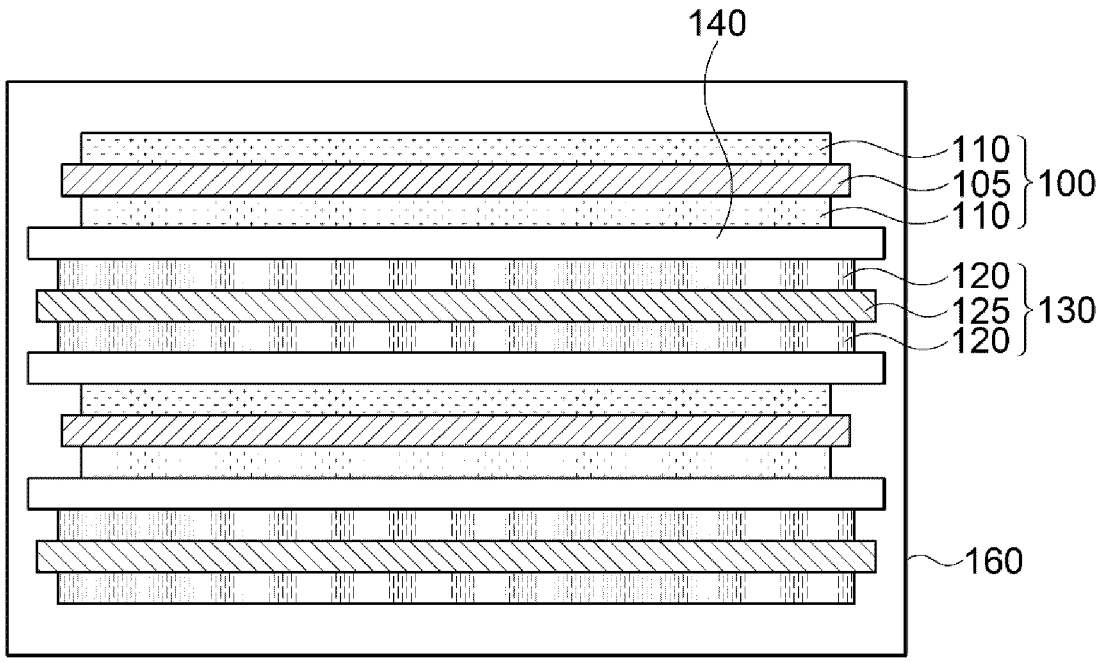

Europäisches Patentamt
European Patent Office
Office européen des brevets

# EUROPEAN SEARCH REPORT

Application Number
EP 25 17 7133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 540 842 A1 (SAMSUNG SDI CO LTD [KR]) 18 September 2019 (2019-09-18)<br>* paragraphs [0049], [0050], [0051], [0057], [0082], [0084]; figure 1; examples 1-6 * | 1-15 | INV.<br>H01M10/0567<br>H01M10/0569<br><br>ADD.<br>H01M4/58<br>H01M10/052 |
| X<br><br>A | US 2024/120539 A1 (LEE JUNYONG [KR] ET AL) 11 April 2024 (2024-04-11)<br>* paragraphs [0105] - [0108], [0131], [0152], [0161]; figure 1; example 1 * | 1-4,6-15<br><br>5 | |
| X | JP 2004 259697 A (MITSUBISHI CHEM CORP) 16 September 2004 (2004-09-16)<br>* paragraphs [0011] - [0013], [0018] - [0021], [0027], [0029], [0030] - [0032], [0051]; examples 1-6 * | 1-15 | |
| X<br><br>A | US 2023/027225 A1 (RYU SUYEOL [KR] ET AL) 26 January 2023 (2023-01-26)<br>* paragraphs [0073], [0078] - [0080], [0096], [0146] - [0149]; example comp. ex. 3 * | 1-4,6-15<br><br>5 | TECHNICAL FIELDS SEARCHED (IPC)<br><br>H01M |

The present search report has been drawn up for all claims

| Place of search | Date of completion of the search | Examiner |
|---|---|---|
| The Hague | 13 October 2025 | Ferreira Marinha, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 7133

This annex lists the patent family members relating to the patent documents cited in the above-mentioned European search report. The members are as contained in the European Patent Office EDP file on The European Patent Office is in no way liable for these particulars which are merely given for the purpose of information.

13-10-2025

| Patent document cited in search report | Publication date | Patent family member(s) | Publication date |
|---|---|---|---|
| EP 3540842 A1 | 18-09-2019 | CN 110277587 A | 24-09-2019 |
| | | EP 3540842 A1 | 18-09-2019 |
| | | KR 20190109099 A | 25-09-2019 |
| | | US 2019288337 A1 | 19-09-2019 |
| US 2024120539 A1 | 11-04-2024 | CN 117957688 A | 30-04-2024 |
| | | EP 4394984 A1 | 03-07-2024 |
| | | KR 20230031707 A | 07-03-2023 |
| | | US 2024120539 A1 | 11-04-2024 |
| | | WO 2023027541 A1 | 02-03-2023 |
| JP 2004259697 A | 16-09-2004 | JP 4770118 B2 | 14-09-2011 |
| | | JP 2004259697 A | 16-09-2004 |
| US 2023027225 A1 | 26-01-2023 | CN 114730917 A | 08-07-2022 |
| | | KR 20210095517 A | 02-08-2021 |
| | | US 2023027225 A1 | 26-01-2023 |
| | | WO 2021149910 A1 | 29-07-2021 |

EPO FORM P0459

For more details about this annex : see Official Journal of the European Patent Office, No. 12/82